# EUROPÄISCHE PATENTSCHRIFT

(11) **EP 1 600 630 B1**
(45) Veröffentlichungstag und Bekanntmachung des Hinweises auf die Patenterteilung: **26.06.2013**
(21) Anmeldenummer: 05450084.8
(22) Anmeldetag: 12.05.2005
(51) Int. Cl.: F04B 25/00, F04B 49/24

(54) **Mehrstufiger Kolbenverdichter zur Verdichtung von Gas und Verfahren zur Kompensationsregelung**
Multistage gas compressor and its control method
Compresseur à plusieurs étages et sa méthode de régulation

(30) Priorität: 27.05.2004 AT 9232004
(43) Veröffentlichungstag der Anmeldung: 30.11.2005
(73) Patentinhaber: Leobersdorfer Maschinenfabrik AG, 1010 Wien (AT)
(72) Erfinder: Huttar, Ernst, 3400 Klosterneuburg (AT); Heumesser, Thomas, 1020 Wien (AT)
(74) Vertreter: Sonn & Partner Patentanwälte

(56) Entgegenhaltungen:
- DE-A1- 2 746 948
- GB-A- 748 627
- JP-A- 57 140 584
- US-A1- 2003 215 339

## Beschreibung

Die Erfindung betrifft einen mehrstufigen Kolbenverdichter zur Verdichtung von Gas, inbesondere Luft, wobei zumindest an eine Verbindungsleitung zwischen zwei Verdichterstufen des mehrstufigen Kolbenverdichters zumindest eine Gas-Zufuhr- bzw. -Entnahme-Leitung angeschlossen ist, und ein Drucksensor zum Erfassen des Gasdrucks beim Austritt des Gases aus dem mehrstufigen Kolbenverdichter vorgesehen ist sowie ein Verfahren zur Kompensationsregelung zumindest eines zwischen zwei Verdichterstufen eines mehrstufigen Kolbenverdichters eingebrachten bzw. abgeleiteten Volumen- bzw. Massenstroms, wobei der Gasdruck beim Austritt des Gases aus dem mehrstufigen Kolbenverdichter erfasst wird.

Es ist bereits bekannt Verdichteranlagen mit Gas-Zufuhr- bzw. GasEntnahme-Leitungen zwischen zwei Verdichterstufen zu versehen, so dass Volumen- bzw. Massenströme über diese Leitungen in die Zwischenstufen eingespeist bzw. daraus abgeleitet werden können. Da bei Kolbenverdichtern die Volumensverhältnisse zwischen den einzelnen Verdichterstufen jedoch unveränderbar festgelegt sind, müssen die zu- bzw. abgeführten Massen- bzw. Volumenströme zeitlich im Wesentlichen konstant sein, so dass keine Überdrücke bzw. Übertemperaturen in den Verdichterstufen auftreten. Sofern nämlich ein gegenüber der vorbestimmten Auslegung erhöhter Massen- oder Volumenstrom zugeleitet wird, muss in der davor liegenden Verdichterstufe eine höhere Verdichtung stattfinden, so dass ein Ansprechen der Sicherheitsventile auftreten kann. Sofern ein gegenüber dem Sollwert erhöhter Massen- oder Volumenstrom abgeleitet wird, kann es bei derartigen, auf konstante Volumen- oder Massenströme ausgelegten Verdichteranlagen zu einer Übertemperatur in der darauf folgenden Verdichterstufe kommen.

Aus der JP 57 140584 A ist ein dreistufiger Kompressor bekannt, bei welchem die maximale Durchflussrate eines Zwischenstufen-Bypasses in Abhängigkeit vom Betriebszustand des Kompressors geregelt wird. Die letzte Kompressor-Stufe ist mit Recheneinrichtungen verbunden, mit welchen ein Überschreiten eines vorgegebenen Wertes für die Druckdifferenz zwischen Einlass und Auslass bzw. ein Überschreiten einer kritischen Temperatur anhand des Druckverhältnisses zwischen Einlass und Auslass erfasst bzw. berechnet wird. Die Signale der Recheneinrichtungen werden an Selektoren geleitet, welche in Abhängigkeit vom Signal eines Drucksensors ein Druck-Steuerventil im Zwischenstufen-Bypass steuern bzw. regeln. Bei diesem Kompressor besteht jedoch keine Möglichkeit, Volumen- bzw. Massenströme in die Zwischenstufen des Verdichters einzuleiten bzw. daraus abzuleiten.

In der GB 748,627 A ist ein dreistufiger Kompressor beschrieben, dessen letzte Stufe mit einem Luft-Vorratsbehälter verbunden ist. Damit der Druck im Vorratsbehälter stets unter einem vorgegebenen Grenzwert gehalten wird, ist eine mechanische Druck-Regelungseinrichtung vorgesehen. Die Druck-Regelungseinrichtung umfasst eine mit dem Luft-Vorratsbehälter verbundene Hochdruck-Kammer und eine zweite Kammer mit demgegenüber verringertem Druck, welche mit einem Auslassventil der zweiten Kompressor-Stufe in Verbindung steht. Wenn der Druck im Vorratsbehälter bzw. der Kammer den vorgegebenen Grenzwert überschreitet, wird ein in einer Öffnung zwischen den Kammern vorgesehenes Kugel-Ventil mittels eines Kolbens von seinem Sitz gehoben und die komprimierte Luft in der Niederdruck-Kammer, sowie die nachströmende Luft von der zweiten Kompressorstufe wird in eine Auslasskammer abgeleitet. Die dritte Kompressor-Stufe wird erst wieder mit Luft versorgt, wenn der Druck unter den Grenzwert fällt und das federbelastete Ventil schließt. Auch bei diesem Kompressor können keine Volumen- bzw. Massenströme in die Zwischenstufen des Verdichters eingeleitet bzw. daraus abgeleitet werden.

Aus der US 6,695,591 B2 ist ein fünfstufiger Verdichter zum Verdichten von Gas bekannt, bei dem in einer ersten Stufe ein Zentrifugalgebläse vorgesehen ist, das von der Kurbelwelle eines Verdichterblocks angetrieben wird. Die einzelnen Verdichterstufen weisen hier jedoch lediglich Überdruckventile auf, über welche jedoch keine zeitlich variierenden Massen- bzw. Volumsströme zu- bzw. abgeleitet werden können.

In der DE 27 46 948 A1 ist ein Verfahren und eine Vorrichtung zur Lieferung von Druckgas beschrieben, welche für Anwendungsarten vorgesehen ist, bei denen der Endverbrauch des Gases bei einem im wesentlichen konstanten Druck liegen soll, wobei der Druck durch den Verbrauchsvorgang oder wenigsten durch Vorrichtungen gesteuert wird, die außerhalb der Verdichteranlage selbst liegen. Als Beispiel hierfür ist ein Naßluftoxidationsverfahren geoffenbart, bei dem ein Hubkolbenverdichter an eine Naßluftoxidationsvorrichtung angeschlossen ist. Von einem Kreisel- bzw. Axialverdichter wird Druckgas über eine Leitung auf der Oberseite des Hubkolbenverdichters eingeleitet, wobei der Kreiselverdichter Gas bei einem konstanten Druck in den Zylinder des Kolbenverdichters liefert.

In der DE 1 129 653 B ist eine Regelung für eine Verdichteranlage mit mehreren Verdichtern gezeigt, bei welcher lediglich eine gemeinsame Sammeldruckleitung vorgesehen ist, an welche mehrere selbständig schaltbare Verdichter angeschlossen sind. In der Sammeldruckleitung ist zudem ein Regelventil vorgesehen, das beim Absenken des Drucks in der Sammelleitung weiter öffnet und beim Ansteigen des Drucks schließt, wobei ein Speicher mit Steuerluft eines der Verdichter angespeist wird.

Aus der DD 230 614 A3 ist ein spezielles Verfahren zur Inbetriebnahme eines mehrstufigen Kolbenverdichters bekannt, wobei hier das aus dem letzten Verdichtungsabschnitt austretende Gas einer Wärmeübertragungsvorrichtung des vorletzten Verdichtungsabschnittes über eine mit einem Absperrventil versehene Leitung zugeführt wird.

In der JP 10009147 A ist noch ein Verfahren zur Regelung eines Kolbenkompressors geoffenbart, wobei das Hochfahren eines Kompressors, der zunächst nur mit 50% seiner Kapazität betrieben wird, in den Vollbetrieb beschrieben ist.

Ziel der vorliegenden Erfindung ist es einen mehrstufigen Kolbenverdichter der eingangs angeführten Art zu schaffen sowie ein Verfahren zur Kompensationsregelung, so dass auch zeitlich variierende Volumen- bzw. Massenströme zwischen den Verdichterstufen eingebracht bzw. abgeleitet werden können, ohne dass ein Überdruck oder eine Übertemperatur in einer der Verdichterstufen auftritt.

Dies wird bei dem mehrstufigen Kolbenverdichter der eingangs angeführten Art dadurch erzielt, dass zum Ausgleich eines über die Gas-Zufuhr- bzw. -Entnahme-Leitung zu- bzw. abgeleiteten zeitlich variierenden Massen- bzw. Volumenstroms ein mengengeregelter Vorverdichter vorgesehen ist, der in Abhängigkeit von dem vom Sensor erfassten Gasdruck derart geregelt ist, dass der Gasaustrittsdruck im Wesentlichen konstant gehalten wird. Durch das Vorsehen eines mengengeregelten Vorverdichters zum Ausgleich der zeitlich variierenden Massen- bzw. Volumenströme kann die in den mehrstufigen Kolbenverdichter eingebrachte Gasmenge derart geregelt werden, dass der Gas-Austritts-Druck im Wesentlichen konstant bleibt, so dass auch in den Zwischenstufen keine überhöhten Drücke bzw. Temperaturen auftreten.

Um die in die erste Verdichterstufe des mehrstufigen Kolbenverdichters eingebrachte Gasmenge auf einfache Weise regeln zu können, ist es günstig, wenn als mengengeregelter Vorverdichter ein ein- oder mehrstufiger Rotationsverdichter, insbesondere ein Roots-Gebläse, ein Schraubenverdichter, ein Drehkolbenverdichter, Flügelzellenverdichter, ein Turboverdichter, oder dergl. vorgesehen ist.

Wenn ein mechanischer, elektronischer, pneumatischer oder hydraulischer Regler zur Mengenregelung des Vorverdichters vorgesehen ist, kann die über den Vorverdichter in die erste Verdichterstufe des mehrstufigen Kolbenverdichters eingebrachte Gasmenge in Abhängigkeit von dem erfassten Gasdruck präzise geregelt werden.

Um ein vergleichsweise großes Gasvolumen gleichzeitig zu verdichten, ist es von Vorteil, wenn zumindest eine Verdichterstufe des mehrstufigen Kolbenverdichters zumindest zwei parallel arbeitende Arbeitsräume aufweist.

Um das zwischen zwei Verdichterstufen eingebrachte Gasvolumen bzw. die eingebrachte bzw. abgeleitete Gasmenge regeln zu können und somit zuverlässig eine erhöhte Temperatur bzw. einen erhöhten Druck in einer der Verdichterstufen vermeiden zu können, ist es von Vorteil, wenn zumindest eine in Abbhängigkeit von dem erfassten Gasdruck geregelte Ventilvorrichtung in der Gas-Zufuhr- bzw. -Entnahme-Leitung vorgesehen ist.

Ebenso ist es zur zuverlässigen Vermeidung von erhöhten Drücken bzw. Temperaturen in einer der Verdichterstufen günstig, wenn zumindest ein Regelventil einer Verdichterstufe vorgesehen ist, das in Abbhängigkeit von dem erfassten Gasdruck geregelt ist.

Das Verfahren der eingangs angeführten Art ist dadurch gekennzeichnet, dass der zeitlich variierende zwischen den Verdichterstufen des mehrstufigen Kolbenverdichters eingebrachte bzw. abgeleitete Volumen- bzw. Massenstrom in Abhängigkeit von dem erfassten Gasdruck über eine in die erste Verdichterstufe eingebrachte Gasmenge derart kompensiert wird, dass der Gasaustrittsdruck im Wesentlichen konstant ist. Durch die Regelung der eingebrachten Gasmenge in die erste Verdichterstufe des mehrstufigen Kolbenverdichters kann der Gasaustrittsdruck im Wesentlichen konstant gehalten werden und es können somit überhöhte Drücke bzw. Temperaturen in den einzelnen Verdichterstufen vermieden werden.

Um den eingebrachten bzw. abgeleiteten Gasmassenstrom bzw. -volumenstrom regeln zu können, ist es von Vorteil, wenn der zwischen den Verdichterstufen eingebrachte bzw. abgeleitete Volumen- bzw. Massenstrom in Abhängigkeit von dem erfassten Gasdruck geregelt wird.

Ebenso ist es zur Vermeidung von Überdrücken bzw. Übertemperaturen in den Verdichterstufen günstig, wenn der Zwischendruck in zumindest einer Verdichterstufe in Abhängigkeit von dem erfassten Gasdruck geregelt wird.

Die Erfindung wird nachstehend anhand von in der Zeichnung dargestellten bevorzugten Ausführungsbeispielen, auf die sie jedoch nicht beschränkt sein soll, noch näher erläutert. Im Einzelnen zeigen in der Zeichnung:
Fig. 1 schematisch ein Schaltbild eines mehrstufigen Verdichters mit einem vorgeschalteten mengengeregelten Vorverdichter;
Fig. 2 ein Schaltbild ähnlich Fig. 1, jedoch mit einem Regelventil in einer Gaszufuhrleitung; und
Fig. 3 ein Schaltbild ähnlich Fig. 1, jedoch mit einem geKompressorventil einer Verdichterstufe.

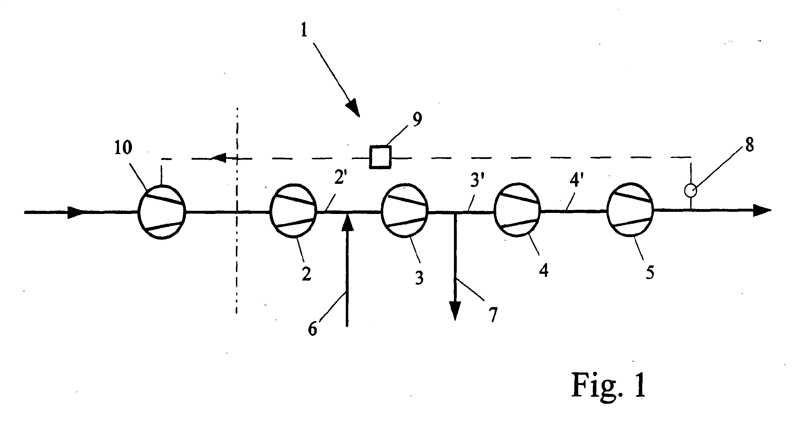

In Fig. 1 ist schematisch ein Schaltbild eines mehrstufigen Kolbenverdichters 1 mit vier Verdichterstufen 2, 3, 4 und 5 gezeigt, die über Verbindungsleitungen 2', 3', 4' miteinander verbunden sind. Zwischen den Verdichterstufen 2 und 3 sind eine Gaszufuhrleitung 6 an die Verbindungsleitung 2' und zwischen den Verdichterstufen 3 und 4 eine Gasentnahmeleitung 7 an die Verbindungsleitung 3' angeschlossen, über welche zeitlich variierende Massen- bzw. Volumenströme zwischen den Verdichterstufen 2, 3 bzw. 3, 4 zu- bzw. abgeleitet werden.

Da bei einem Kolbenverdichter die Volumensverhältnisse zwischen den einzelnen Verdichterstufen unveränderbar festgelegt sind, kommt es bei herkömmlichen Mehrstufen-Kolbenverdichtern zu einem erhöhten Druck bei der davor liegenden Verdichterstufe, sofern eine erhöhte Gasmenge zugeführt wird bzw. zu einer erhöhten Temperatur in der darauf folgenden Verdicherstufe, sofern eine erhöhte Gasmenge zwischen den Verdichterstufen abgeführt wird, so dass der Gasaustrittsdruck starken Schwankungen unterliegt. Um den Gasaustrittsdruck im Wesentlichen konstant zu halten, ist ein Sensor 8 zum Erfassen des Gasdrucks beim Austritt aus dem mehrstufigen Kolbenverdichter 1 vorgesehen, welcher einen mechanischen, elektronischen, pneumatischen oder hydraulischen Regler 9 ansteuert, über welchen die Drehzahl eines mengengeregelten Vorverdichters 10 geregelt wird, so dass der Gasaustrittsdruck im Wesentlichen konstant gehalten wird und somit auch in den Verdichterstufen 2 bis 5 weder Sicherheitsventile aufgrund überhöhten Drucks ansprechen noch Übertemperaturen auftreten.

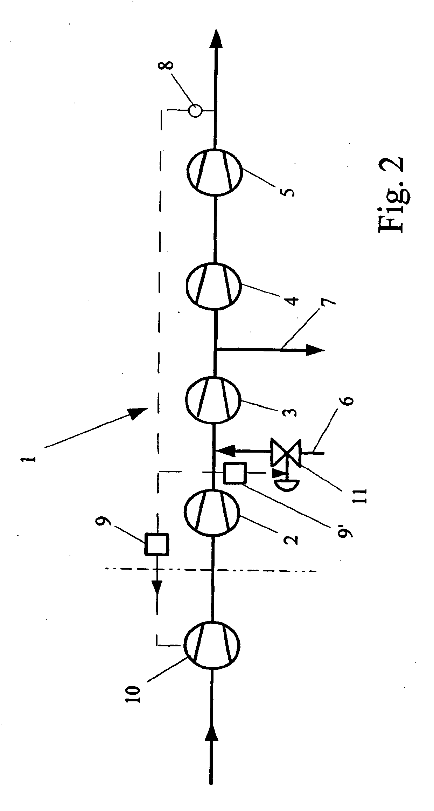

Wie aus Fig. 2 ersichtlich kann in der Gaszufuhrleitung 6 zusätzlich ein Regelventil 11 vorgesehen sein, welches über einen Regler 9', der ebenso von dem Drucksensor 8 angesteuert wird, geregelt werden, um die zwischen den Verdichterstufen 2 und 3 eingebrachte Gasmenge innerhalb eines Toleranzbereichs zu halten, so dass zuverlässig keine Übertemperaturen bzw. Überdrücke auftreten. Selbstverständlich kann ebenso ein Regelventil in der Gasentnahmeleitung 7 angeordnet sein.

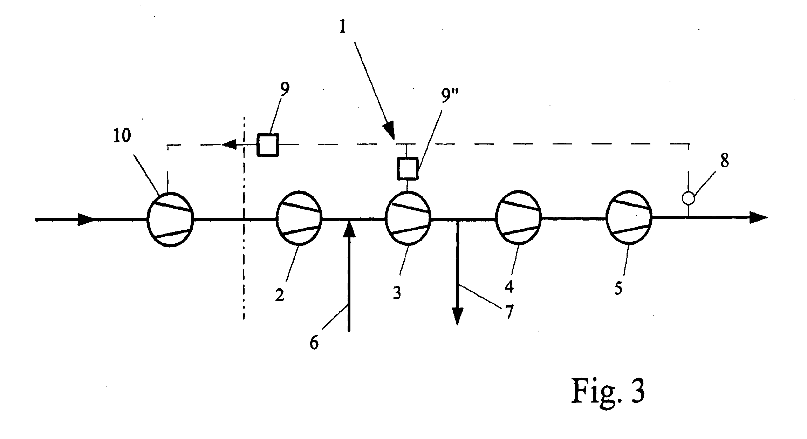

Alternativ zu einem Regelventil in einer Gaszufuhr- bzw. -entnahmeleitung 6, 7 kann auch ein über einen Regler 9" angesteuertes Kompressorventil (nicht näher dargestellt) einer Verdichterstufe in Abhängigkeit von dem über den Sensor 8 erfassten Gasdruck geregelt werden. Wie in Fig. 3 ersichtlich, ist hierbei ein Kompressorventil der Verdichterstufe 3 über einen Regler 9" geregelt. Selbstverständlich kann jedoch auch jedes andere Kompressorventil der übrigen Verdichterstufen 2, 4, 5 in Abhängigkeit von dem vom Sensor 8 erfassten Gasdruck geregelt werden. Wesentlich ist lediglich, dass durch die Kompensationsregelung ein Auftreten von überhöhten Drücken bzw. Temperaturen zwischen den Verdichterstufen vermieden wird und somit der Austrittsdruck aus dem mehrstufigen Kolbenverdichter innerhalb eines vorgegebenen Toleranzbereichs im Wesentlichen konstant gehalten wird.

## Patentansprüche

1. Mehrstufiger Kolbenverdichter (1) zur Verdichtung von Gas, insbesondere Luft, wobei zumindest an eine Verbindungsleitung (2', 3', 4') zwischen zwei Verdichterstufen (2, 3, 4, 5) des mehrstufigen Kolbenverdichters (1) zumindest eine Gas-Zufuhr- bzw. -Entnahme-Leitung (6, 7) angeschlossen ist, und ein Drucksensor (8) zum Erfassen des Gasdrucks beim Austritt des Gases aus dem mehrstufigen Kolbenverdichter (1) vorgesehen ist, **dadurch gekennzeichnet, dass** zum Ausgleich eines über die Gas-Zufuhr- bzw. -Entnahme-Leitung (6, 7) zu- bzw. abgeleiteten zeitlich variierenden Massen- bzw. Volumenstroms als Kompensationsmittel ein mengengeregelter Vorverdichter (10) vorgesehen ist, der in Abhängigkeit von dem vom Sensor (8) erfassten Gasdruck derart geregelt ist, dass der Gasaustrittsdruck im Wesentlichen konstant gehalten wird.

2. Mehrstufiger Kolbenverdichter nach Anspruch 1, **dadurch gekennzeichnet, dass** als mengengeregelter Vorverdichter (10) ein ein- oder mehrstufiger Rotationsverdichter, insbesondere ein Roots-Gebläse, ein Schraubenverdichter, ein Drehkolbenverdichter, Flügelzellenverdichter, ein Turboverdichter, oder dergl. vorgesehen ist.

3. Mehrstufiger Kolbenverdichter nach einem der Ansprüche 1 oder 2, **dadurch gekennzeichnet, dass** ein mechanischer, elektronischer, pneumatischer oder hydraulischer Regler (9) zur Mengenregelung des Vorverdichters (10) vorgesehen ist.

4. Mehrstufiger Kolbenverdichter nach einem der Ansprüche 1 bis 3, **dadurch gekennzeichnet, dass** zumindest eine Verdichterstufe(2, 3, 4, 5) des mehrstufigen Kolbenverdichters (1) zumindest zwei parallel arbeitende Arbeitsräume aufweist.

5. Mehrstufiger Kolbenverdichter nach einem der Ansprüche 1 bis 4, **dadurch gekennzeichnet, dass** zumindest eine in Abbhängigkeit von dem erfassten Gasdruck geregelte Ventilvorrichtung (11) in der Gas-Zufuhr- bzw. -Entnahme-Leitung (6, 7) vorgesehen ist.

6. Mehrstufiger Kolbenverdichter nach einem der Ansprüche 1 bis 5, **dadurch gekennzeichnet, dass** zumindest ein Regelventil einer Verdichterstufe (2, 3, 4, 5) vorgesehen ist, das in Abbhängigkeit von dem erfassten Gasdruck geregelt ist.

7. Verfahren zur Kompensationsregelung zumindest eines zwischen zwei Verdichterstufen (2, 3, 4, 5) eines mehrstufigen Kolbenverdichters (1) eingebrachten bzw. abgeleiteten Volumen- bzw. Massenstroms, wobei der Gasdruck beim Austritt des Gases aus dem mehrstufigen Kolbenverdichter (1) erfasst wird, **dadurch gekennzeichnet, dass** der zeitlich variierende, zwischen den Verdichterstufen des mehrstufigen Kolbenverdichters (1) eingebrachte bzw. abgeleitete Volumen- bzw. Massenstrom in Abhängigkeit von dem erfassten Gasdruck derart kompensiert wird, dass der Gasaustrittsdruck über eine in die erste Verdichterstufe (2) eingebrachte Gasmenge im Wesentlichen konstant gehalten wird.

8. Verfahren nach Anspruch 7, **dadurch gekennzeichnet, dass** der zwischen den Verdichterstufen (2, 3, 4, 5) eingebrachte bzw. abgeleitete Volumen- bzw. Massenstrom in Abhängigkeit von dem erfassten Gasdruck geregelt wird.

9. Verfahren nach einem der Ansprüche 7 oder 8, **dadurch gekennzeichnet, dass** der Zwischendruck in zumindest einer Verdichterstufe (2, 3, 4, 5) in Abhängigkeit von dem erfassten Gasdruck geregelt wird.

## Claims

1. A multistage piston compressor (1) for compressing gas, particularly air, wherein at least one gas supply pipe and/or gas discharge pipe (6, 7) is connected to at least one connecting pipe (2', 3', 4') between two compressor stages (2, 3, 4, 5) of said multistage piston compressor (1), and wherein a pressure sensor (8) is provided to detect the pressure of the gas exiting said multistage piston compressor (1), **characterized in that** a flow rate-controlled pre-compressing blower (10) is provided as a compensation means to compensate any variations over time in the mass or volume flow supplied and/or discharged via said gas supply pipe and/or gas discharge pipe (6, 7), which pre-compressing blower (10) is controlled such that the gas exit pressure as a function of the gas pressure detected by said sensor (8) is maintained essentially at a constant level.

2. A multistage piston compressor according to claim 1, **characterized in that** said flow rate-controlled pre-compressing blower (10) is a single stage or multistage rotary compressor, particularly a Roots blower, a rotary screw compressor, a rotary piston compressor, a rotary vane compressor, a turbo compressor or similar compressor.

3. A multistage piston compressor according to any one of claims 1 or 2, **characterized in that** a mechanical, electronic, pneumatic or hydraulic controller (9) is provided to control the flow rate of said pre-compressing blower (10).

4. A multistage piston compressor according to any one of claims 1 to 3, **characterized in that** at least one compressor stage (2, 3, 4, 5) of said multistage piston compressor (1) has at least two operating chambers operating in parallel.

5. A multistage piston compressor according to any one of claims 1 to 4, **characterized in that** at least one valve means (11) is provided in said gas supply pipe and/or gas discharge pipe (6, 7), said valve means (11) being controlled as a function of said detected gas pressure.

6. A multistage piston compressor according to any one of claims 1 to 5, **characterized in that** at least one control valve of one compressor stage (2, 3, 4, 5) is provided, which control valve is controlled as a function of said detected gas pressure.

7. A method of compensation controlling at least one volume or mass flow supplied and/or discharged between two compressor stages (2, 3, 4, 5) of a multistage piston compressor (1), wherein said gas pressure is detected as said gas exits said multistage piston compressor (1), **characterized in that** variations over time in said volume or mass flow supplied and/or discharged between said compressor stages of said multistage piston compressor (1) are compensated as a function of said detected gas pressure such that the gas exit pressure is maintained at an essentially constant level using gas introduced into said first compressor stage (2).

8. A method according to claim 7, **characterized in that** said volume or mass flow supplied and/or discharged between said compressor stages (2, 3, 4, 5) is controlled as a function of said detected gas pressure.

9. A method according to any one of claims 7 or 8, **characterized in that** the intermediate pressure in at least one compressor stage (2, 3, 4, 5) is controlled as a function of said detected gas pressure.

## Revendications

1. Compresseur à piston (1) à plusieurs étages pour la compression de gaz, en particulier d'air, dans lequel au moins une conduite d'amenée de gaz ou d'évacuation de gaz (6, 7) est raccordée à au moins une conduite de liaison (2', 3', 4') entre deux étages (2, 3, 4, 5) du compresseur à piston (1) à plusieurs étages, et un capteur de pression (8) pour la détection de la pression gazeuse à la sortie du gaz hors du compresseur à piston (1) à plusieurs étages est prévu, **caractérisé en ce qu'**un précompresseur (10) à régulation de débit est prévu comme moyen de compensation pour la compensation d'un débit massique ou volumique temporellement variable, amené ou évacué par la conduite d'amenée de gaz ou d'évacuation de gaz (6, 7), lequel est régulé en fonction de la pression gazeuse détectée par le capteur (8), de manière à maintenir la pression de sortie gazeuse sensiblement constante.

2. Compresseur à piston à plusieurs étages selon la revendication 1, **caractérisé en ce que**, en tant que précompresseur (10) à régulation de débit, il est prévu un compresseur rotatif volumétrique à un ou plusieurs étages, en particulier une soufflante de type Roots, un compresseur à vis, un compresseur cellulaire à piston rotatif, un compresseur à palettes, un turbocompresseur, ou similaire.

3. Compresseur à piston à plusieurs étages selon la revendication 1 ou 2, **caractérisé en ce qu'**un régulateur (9) mécanique, électronique, pneumatique ou hydraulique est prévu pour la régulation de débit du précompresseur (10).

4. Compresseur à piston à plusieurs étages selon l'une des revendications 1 à 3, **caractérisé en ce qu'**au moins un étage (2, 3, 4, 5) du compresseur à piston (1) à plusieurs étages comprend au moins deux chambres de travail fonctionnant parallèlement.

5. Compresseur à piston à plusieurs étages selon l'une des revendications 1 à 4, **caractérisé en ce qu'**au moins un dispositif de vanne (11) régulé en fonction de la pression gazeuse détectée est prévu dans la conduite d'amenée de gaz ou d'évacuation de gaz (6, 7).

6. Compresseur à piston à plusieurs étages selon l'une des revendications 1 à 5, **caractérisé en ce qu'**il est prévu au moins une vanne de régulation d'un étage (2, 3, 4, 5) de compresseur, laquelle est régulée en fonction de la pression gazeuse détectée.

7. Procédé de régulation de la compensation d'au moins un débit volumique ou massique amené ou évacué entre deux étages (2, 3, 4, 5) d'un compresseur à piston (1) à plusieurs étages, dans lequel la pression gazeuse est détectée à la sortie du gaz hors du compresseur à piston (1) à plusieurs étages, **caractérisé en ce que** le débit volumique ou massique temporellement variable, amené ou évacué entre les étages du compresseur à piston (1) à plusieurs étages, est compensé en fonction de la pression gazeuse détectée, de manière à maintenir la pression de sortie gazeuse sensiblement constante au moyen d'un débit gazeux amené dans le premier étage (2) de compresseur.

8. Procédé selon la revendication 7, **caractérisé en ce que** le débit volumique ou massique amené ou évacué entre les étages (2, 3, 4, 5) de compresseur est régulé en fonction de la pression gazeuse détectée.

9. Procédé selon la revendication 7 ou 8, **caractérisé en ce que** la pression intermédiaire dans au moins un étage (2, 3, 4, 5) de compresseur est régulée en fonction de la pression gazeuse détectée.
